# EUROPÄISCHE PATENTSCHRIFT

(11) **EP 3 980 814 B1**
(45) Veröffentlichungstag und Bekanntmachung des Hinweises auf die Patenterteilung: **21.12.2022**
(21) Anmeldenummer: 21705453.5
(22) Anmeldetag: 10.02.2021
(51) Int. Cl.: G01S 17/931, G01S 7/481

(54) **KRAFTFAHRZEUG MIT EINEM OPTISCHEN UMGEBUNGSSENSOR UND VERFAHREN ZUM BETRIEB EINES KRAFTFAHRZEUGS**
MOTOR VEHICLE COMPRISING AN OPTICAL ENVIRONMENT SENSOR AND METHOD FOR OPERATING A MOTOR VEHICLE
VÉHICULE À MOTEUR COMPRENANT UN CAPTEUR D'ENVIRONNEMENT OPTIQUE ET PROCÉDÉ DE FONCTIONNEMENT D'UN VÉHICULE À MOTEUR

(30) Priorität: 06.05.2020 DE 102020112311
(43) Veröffentlichungstag der Anmeldung: 13.04.2022
(73) Patentinhaber: Audi AG, 85045 Ingolstadt (DE)
(72) Erfinder: KRÄMER, Stefan, 85049 Ingolstadt (DE); RAAIJMAKERS, Marvin, 85049 Ingolstadt (DE)
(86) Internationale Anmeldenummer: PCT/EP2021/053193
(87) Internationale Veröffentlichungsnummer: WO 2021/223920

(56) Entgegenhaltungen:
- EP-A1- 3 579 014
- EP-A1- 3 650 887
- DE-A1-102018 006 607
- US-A1- 2019 277 962
- US-A1- 2020 064 483

## Beschreibung

Die Erfindung betrifft ein Kraftfahrzeug, aufweisend wenigstens einen optischen Umgebungssensor, der einen Erfassungsbereich in einer Erfassungsrichtung aufweist. Daneben betrifft die Erfindung ein Verfahren zum Betrieb eines Kraftfahrzeugs.

In modernen Kraftfahrzeugen spielt die Umfelderfassung eine immer wichtigere Rolle. Hierzu werden in modernen Kraftfahrzeugen Umgebungssensoren eingesetzt, um die Umgebung des Kraftfahrzeugs zu erfassen. Dies ist besonders wichtig bei Fahrerassistenzfunktionen, die warnende Sicherheitshinweise ausgeben können und/oder sogar zum Auslösen von Fahreingriffen ausgebildet sind. Gerade bei hohen Geschwindigkeiten benötigen Fahrerassistenzsysteme, insbesondere solche, die zum wenigstens teilweise automatischen Betrieb des Kraftfahrzeugs ausgebildet sind, für einen komfortablen und sicheren Betrieb eine sehr weite Vorausschau. Ein Beispiel hierfür ist der sogenannte "Autobahnpilot", der beispielsweise adaptive Längsführungsfunktionen und/oder Spurwechselfunktionen vereinen kann. Bei einer Richtgeschwindigkeit von 130 km/h muss zum Erreichen des kollisionsfreien Stillstands ein stehendes Hindernis bereits in einem Abstand von mehreren hundert Metern detektierbar sein. In einem anderen Beispiel sind für einen sicheren Fahrspurwechsel bei den potentiell möglichen Differenzgeschwindigkeiten auf Schnellstraßen, beispielsweise deutschen Autobahnen, ebenfalls mehrere hundert Meter Erfassungsreichweite in den Rückraum des Kraftfahrzeugs notwendig, um einen konfliktierenden Verkehrsteilnehmer auf der Zielfahrspur vor Beginn des Spurwechsels rechtzeitig erkennen zu können.

Für derartige langreichweitige Detektionsaufgaben bieten sich Lidarsensoren zur Realisierung derartiger Technologien an, da sie eine verhältnismäßig hohe Winkelauflösung und Erfassungsreichweite erzielen können. In vielen aktuell vorgeschlagenen Kraftfahrzeugen ist allerdings die Integration von Lidarsensorik auf die Front von Kraftfahrzeugen mit einer Ausrichtung auf das Vorfeld beschränkt. Das bedeutet, der Bereich hinter dem Kraftfahrzeug, also der Rückraum, kann nicht durch hochauflösende Lidar-Sensorik abgedeckt werden.

DE 101 14 932 A1 betrifft eine fahrzeugtaugliche, hochaufgelöste 3D-Erfassung des Umfelds eines Straßenfahrzeugs mit umgebungserfassenden Sensoren. Dabei wird vorgeschlagen, eine zweidimensional entfernungsauflösende Sensoranordnung zu verwenden, um aus hierdurch erfassten zweidimensionalen Entfernungsprofilen, welche aufeinander folgend vermessen wurden, ein dreidimensionales Abbild der Umgebung zu erzeugen. Dabei wird in einer Ausgestaltung vorgeschlagen, einen Anteil der Strahlen des Entfernungssensors in einen anderen Raumbereich abzulenken, so dass zwei gleichzeitig genutzte Strahlengänge entstehen, wobei ein zur Seite abgelenkter Strahlengang genutzt wird, um die Relativlage des Straßenfahrzeugs bezüglich seiner Umgebung zu ermitteln.

DE 10 2017 222 078 A1 betrifft eine Anordnung und ein Verfahren für eine Anordnung sowie einen Fahrzeugscheinwerfer. Die Anordnung soll eine Lichtquelle für ein Lichtsystem und eine Strahlungsquelle für ein Sensorsystem zur Umgebungserfassung aufweisen. Dabei ist der Lichtquelle eine adaptive Spiegelanordnung nachgeschaltet, über die von der Lichtquelle emittiertes Licht lenkbar ist. So soll die Strahlung der Strahlungsquelle für das Sensorsystem über die adaptive Spiegelanordnung in den Pfad des weißen Nutzlichts eines Scheinwerfers gekoppelt werden. Über einen MEMS-Spiegel kann von einem Lidar-System genutzte infrarote Strahlung zur Umgebungserfassung in die Ferne geworfen werden.

DE 10 2010 047 984 A1 betrifft eine Umlenkspiegelanordnung für eine optische Messvorrichtung und eine korrespondierende optische Messvorrichtung. Die Umlenkspiegelanordnung soll eine Spiegeleinheit umfassen, welche auf einer drehbaren Achse angeordnet ist, um einen abtastenden Laserscanner, durch den der Erfassungsbereich sukzessive abgetastet wird, zu schaffen. Der Erfindung liegt die Aufgabe zugrunde, eine Möglichkeit zum vielseitigeren Einsatz eines optischen Umgebungssensors, die diesen schonend umgesetzt ist, anzugeben.

Zur Lösung dieser Aufgabe ist bei einem Kraftfahrzeug der eingangs genannten Art erfindungsgemäß vorgesehen, dass das Kraftfahrzeug ferner eine Umlenkanordnung für den Umgebungssensor aufweist, welche umfasst:
- eine Optikanordnung zur Umlenkung der Erfassungsrichtung und des gesamten Erfassungsbereichs, und
- eine Verstelleinrichtung zum wahlweisen Verbringen der Optikanordnung in den und aus dem Erfassungsbereich des
Umgebungssensors,
wobei die Verstelleinrichtung zum Ausfahren und/oder Ausklappen der Optikanordnung aus einer in der Karosserie des Kraftfahrzeugs versenkten Grundposition in eine Umlenkposition ausgebildet ist,
wobei die Optikanordnung in der Grundposition hinter einer durch die Verstelleinrichtung und/oder eine Bewegung der Optikanordnung öffenbaren Klappe angeordnet ist.

Erfindungsgemäß wird mithin eine Augmentierung beziehungsweise Erweiterung eines Umgebungssensorsystems, bevorzugt eines Lidar-Systems, vorgeschlagen, indem eine ein oder mehrere Optikelemente, insbesondere Spiegel, umfassende Optikanordnung verwendet wird, um den Sichtkegel, also den Erfassungsbereich, des Umgebungssensors insgesamt selektiv zu verändern. Diese Optikanordnung ist über eine Verstelleinrichtung in den zur erfassungsrelevanten Strahlengang, also den Erfassungsbereich, gezielt einbringbar, wenn eine Umlenkung der Erfassungsrichtung und somit des gesamten Erfassungsbereichs benötigt wird. Soll wieder der Basis-Erfassungsbereich, der ohne Optikanordnung gegeben ist, genutzt werden, kann durch Ansteuerung der Verstelleinrichtung die Optikanordnung wieder aus dem erfassungsrelevanten Strahlengang und somit dem Erfassungsbereich entfernt werden. Auf diese Weise werden mittels der optional nutzbaren Optikanordnung wenigstens zwei unterschiedliche Ausrichtungen des Erfassungsbereichs des Umgebungssensors bereitgestellt.

In einer besonders vorteilhaften Ausgestaltung der vorliegenden Erfindung ist die Erfassungsrichtung des Umgebungssensors ohne die Nutzung der Optikanordnung auf das Vorfeld des Kraftfahrzeugs, insbesondere zumindest im Wesentlichen parallel zu oder entlang der Fahrzeuglängsachse, ausgerichtet, wobei die wenigstens eine umgelenkte Erfassungsrichtung auf den Rückraum des Kraftfahrzeugs, insbesondere zumindest im Wesentlichen parallel zu oder entlang der Fahrzeuglängsachse, und/oder auf einen Seitenbereich des Kraftfahrzeugs, insbesondere zumindest im Wesentlichen parallel zu oder entlang der Fahrzeugquerachse, ausgerichtet ist. Mit anderen Worten kann der Umgebungssensor mithin grundsätzlich auf das Vorfeld des Kraftfahrzeugs ausgerichtet sein. Durch die Hinzufügung der Umlenkanordnung kann ein derartiges frontgerichtetes Umgebungssensorsystem so manipuliert werden, dass es auch Bereiche hinter und/oder neben dem Kraftfahrzeug abdecken kann, wenn die Optikanordnung in den erfassungsrelevanten Strahlengang eingebracht wird.

Mit besonderem Vorteil werden ferner die grundsätzlichen Erfassungseigenschaften des Umgebungssensors nicht verändert, das bedeutet, es kann vorgesehen sein, dass die Optikanordnung zu dem Erfassungsbereich geometrisch unverändert belassenden Umlenkung der Erfassungsrichtung ausgebildet ist. Auf diese Weise kann beispielsweise ein Lidarsensor sowohl aus dem Vorfeld als auch aus dem Rückraum unmittelbar vergleichbar und im Wesentlichen gleichartig auszuwertende Sensordaten liefern. Mit anderen Worten liefert der Umgebungssensor dieselben, vollständigen, auswertbaren Sensordaten, nur aus einem anders orientierten Erfassungsbereich.

Im folgenden werden sich viele Ausführungsbeispiele auf die Nutzung eines Lidarsensors als Umgebungssensor beziehen, nachdem in bevorzugter Ausgestaltung der Umgebungssensor ein Lidarsensor ist. Das hier beschriebene Konzept lässt sich jedoch auch auf andere optische Umgebungssensoren, wie beispielsweise Kameras, anwenden.

Es sei an dieser Stelle noch angemerkt, dass der als Lidarsensor ausgebildete Umgebungssensor auch mehrere Sensorköpfe aufweisen kann, denen unterschiedliche Erfassungsbereiche mit entsprechend unterschiedlichen Erfassungsrichtungen zugeordnet sein können, das bedeutet, die Sensorköpfe können unterschiedlich ausgerichtet sein. In einem solchen Fall lässt sich die Umlenkanordnung selbstverständlich sowohl so ausgestalten, dass sie nur einen der Erfassungsbereiche betrifft, denkbar ist es aber auch, dass die Erfassungsrichtungen beider oder allgemein mehrerer Erfassungsbereiche des Lidarsensors durch die Optikanordnung beeinflusst werden, wenn diese im jeweiligen erfassungsrelevanten Strahlengang platziert wird, wobei insbesondere auch eine unterschiedliche und/oder sogar unabhängig einstellbare Veränderung der Erfassungsrichtung für unterschiedliche Erfassungsbereiche des Lidarsensors denkbar ist. Betrachtet man beispielhaft einen Lidarsensor, der zwei Sensorköpfe, insbesondere einen Nahbereichskopf und einen Fernbereichskopf, aufweist, sieht eine bevorzugte Ausgestaltung der vorliegenden Erfindung vor, dass wenigstens der Erfassungsbereich des Fernbereich-Sensorkopfes umgelenkt wird, wobei der Erfassungsbereich des Nahbereich-Sensorkopfes unverändert bleiben kann, gleichartig wie der Erfassungsbereich des Fernbereich-Sensorkopfes umgelenkt werden kann und/oder andersartig als der Erfassungsbereich des Fernbereich-Sensorkopfes umgelenkt werden kann, was durch eine entsprechende Ausbildung der Optikanordnung, welche dann insbesondere getrennte Optikelemente, insbesondere Spiegel, für die Sensorköpfe aufweisen kann, erreicht wird.

Bevorzugt umfasst die Optikanordnung wenigstens einen Spiegel, wobei auch alle Optikelemente, mithin optisch wirksamen Elementen, als Spiegel ausgebildet sein können. In diesem Fall liegt dann eine Spiegelanordnung als Optikanordnung vor. Bei einem Lidarsensor werden mithin ein oder mehrere Spiegel genutzt, die die Lichtpulse des Lidarsensors beziehungsweise konkret des Sensorkopfes deflektieren, um den Erfassungsbereich des Lidarsensors zu verändern.

Neben der flexibleren Einsetzbarkeit des Umgebungssensors, insbesondere des Lidarsensors, hat die Nutzung einer zusätzlichen, sensorexternen Umlenkanordnung den Vorteil, dass gegenüber einer Drehung des gesamten Umgebungssensors die fragile Sensorik nicht mechanisch beansprucht wird und die Einbaulage des Umgebungssensors fest bleibt. Ferner kann die ursprüngliche Erfassungskonfiguration durch Entfernen der Optikanordnung, beispielsweise hochklappen oder dergleichen, bei Bedarf extrem schnell wieder hergestellt werden.

Zwar wird durch die optische Umlenkung des erfassungsrelevanten Strahlengangs, insbesondere die Strahldeflektion durch Spiegel, der ursprüngliche Erfassungsbereich (Basiserfassungsbereich) nicht mehr vom Umgebungssensor abgedeckt, jedoch sind die bereits eingangs diskutierten hohen Sichtweiten aus funktionaler Sicht, insbesondere bei Fahrerassistenzfunktionen, auch nicht durchgängig notwendig. In einem Beispiel kann bei einer Überholassistenzfunktion, beispielsweise in einem Autobahnpiloten, angenommen werden, dass diese in der Regel durch ein langsames Vorderfahrzeug ausgelöst wird, das sich bereits so nah zum eigenen Kraftfahrzeug befindet, dass eine zuverlässige Detektion und Verfolgung auch durch die restliche Umgebungssensorik des Kraftfahrzeugs, beispielsweise einem Nahbereichs-Sensorkopf des Lidarsensors, durch Radarsensoren und/oder eine Kamera, sichergestellt ist, so dass der Fernbereichs-Sensorkopf des Lidarsensors ohne Probleme zur Überwachung der Zielfahrspur nach hinten genutzt werden kann. In einer anderen exemplarischen Anwendung ist es beispielsweise auch denkbar, im urbanen Einsatz an einer Kreuzung durch Umlenkung des Erfassungsbereichs von links oder rechts herannahenden Verkehr rechtzeitig zu detektieren.

Allgemein kann es im Rahmen der vorliegenden Erfindung also zweckmäßig sein, wenn der Umgebungssensor in dem umlenkbaren Erfassungsbereich eine Erfassungsreichweite von wenigstens 100 m aufweist. Dies ist insbesondere dann relevant, wenn neben der Überwachung des Vorfelds des Kraftfahrzeugs auch eine Erfassung des Rückraums des Kraftfahrzeugs stattfinden soll. Hierzu sieht die Erfindung, wie beschrieben, eine extern zum Umgebungssensor, insbesondere also außerhalb des Sensorgehäuses, angeordnete Umlenkanordnung vor, um bei einem Lidarsensor insbesondere das Sende- und Empfangssignal in weitere Bereiche zu leiten, insbesondere in einen Rückraum des Kraftfahrzeugs.

In konkreter Ausgestaltung der vorliegenden Erfindung kann vorgesehen sein, dass das Kraftfahrzeug wenigstens ein die Sensordaten des Umgebungssensors auswertendes Fahrerassistenzsystem mit einer Steuereinrichtung aufweist, wobei die Steuereinrichtung zur situationsabhängigen Nutzung der Umlenkanordnung durch Ansteuerung wenigstens der Verstelleinrichtung ausgebildet ist. Bei der Situation kann es sich um eine Fahrsituation des Kraftfahrzeugs und/oder eine Betriebssituation des Fahrerassistenzsystems handeln. Insbesondere kann die Situation das Vorliegen eines bestimmten Betriebszustands des Fahrerassistenzsystems umfassen, beispielsweise also ein Rückwärtsfahren, eine Situation während eines Überholvorgangs und dergleichen. Bei dem Fahrerassistenzsystem kann es sich insbesondere um ein zur wenigstens teilweise automatischen Führung des Kraftfahrzeugs ausgebildetes Fahrerassistenzsystem handeln, welches mithin in der Lage ist, automatisiert Fahreingriffe bezüglich der Längsführung und/oder der Querführung durchzuführen. Beispielsweise kann es sich bei dem Fahrerassistenzsystem um ein Längsführungssystem und/oder ein Spurwechselassistenzsystem und/oder ein Kreuzungsassistenzsystem handeln beziehungsweise das Fahrerassistenzsystem kann ein solches System umfassen. Insbesondere kann es sich bei dem Fahrerassistenzsystem um einen sogenannten Autobahnpiloten handeln, der innerhalb gewisser Systemgrenzen den gesamten Betrieb des Kraftfahrzeugs auf einer Autobahn oder sonstigen Schnellstraße automatisiert steuern kann, insbesondere durch Integration einer adaptiven Geschwindigkeitsregelung (ACC-System) und einer Spurwechselassistenz. So kann ein Autobahnpilot beispielsweise auf Grundlage der zur Verfügung stehenden Daten des Umgebungssensors sowie weiterer Umgebungssensorik nicht nur auf eine bestimmte Reisegeschwindigkeit und/oder voranfahrende Verkehrsteilnehmer regeln, sondern auch einen Überholvorgang beziehungsweise konkret einen Spurwechsel initiieren.

Die Steuereinrichtung kann zur intermittierenden und/oder kontinuierlichen Umlenkung der Erfassungsrichtung während eines situationsbezogenen Umlenkzeitraums ausgebildet sein. Das bedeutet, während des Bestehens einer Situation, also der Dauer eines situationsbezogenen Umlenkzeitraums, kann eine kontinuierliche Umlenkung erfolgen, so dass nur Sensordaten aus dem umgelenkten Erfassungsbereich vorliegen. Denkbar ist es jedoch auch, beispielsweise abwechselnd den Basiserfassungsbereich und den wenigstens einen umgelenkten Erfassungsbereich zu nutzen, beispielsweise für jeweils gleich lange Zeiträume. So können beispielsweise zyklisch Sensordaten aus dem Vorfeld des Kraftfahrzeugs und dem Rückraum des Kraftfahrzeugs erhalten werden.

Eine besonders zweckmäßige Weiterbildung der vorliegenden Erfindung sieht vor, dass die Optikanordnung wenigstens einen durch die Steuereinrichtung situationsabhängig ansteuerbaren Aktor und/oder die Verstelleinrichtung unabhängig durch die Steuereinrichtung situationsabhängig ansteuerbare Teileinrichtungen zur Einstellung unterschiedlicher umgelenkter Erfassungsrichtungen aufweist. Mit anderen Worten können verschiedene umgelenkte Erfassungsrichtungen und somit verschiedene umgelenkte Erfassungsbereiche bereitgestellt werden. Hierfür können entweder über Aktoren veränderbare Optikelemente der Optikanordnung vorgesehen sein, beispielsweise aus dem erfassungsrelevanten Strahlengang entfernbare Spiegel und/oder drehbare Spiegel, und/oder die Verstelleinrichtung kann Teileinrichtungen, beispielsweise an unterschiedlichen Stellen der Karosserie, umfassen, die unabhängig ansteuerbar sind. In einer beispielhaften Ausgestaltung kann eine erste Teileinrichtung der Verstelleinrichtung wenigstens ein erstes Optikelement der Optikanordnung unmittelbar vor dem Umgebungssensor ausfahren beziehungsweise ausklappen, während eine weitere Teileinrichtung in einem Eckbereich des Kraftfahrzeugs vorgesehen ist und wenigstens ein weiteres Optikelement der Optikanordnung in den von dem wenigstens einem ersten Optikelement bereits umgeleiteten erfassungsrelevanten Strahlengang optional einbringen kann. Ist beispielsweise der Umgebungssensor auf das Vorfeld des Kraftfahrzeugs gerichtet, kann der erste Anteil der Optikanordnung, mithin das wenigstens eine erste Optikelement, den Erfassungsbereich beispielsweise zur Seite des Kraftfahrzeugs, insbesondere in Richtung der Fahrzeugquerachse, umlenken. Folgt nun kein weiteres Optikelement, ist der Erfassungsbereich auf die Seite umgelenkt. Wird nun jedoch, beispielsweise an der entsprechenden vorderen Ecke des Kraftfahrzeugs, der zweite Anteil der Optikanordnung, mithin das wenigstens eine weitere (zweite) Optikelement, in den erfassungsrelevanten Strahlengang eingebracht, wird der Erfassungsbereich nach hinten, also auf den Rückraum des Kraftfahrzeugs, mithin am eigenen Kraftfahrzeug vorbei, umgelenkt. Ähnliche Ausgestaltungen lassen sich selbstverständlich auch mit Optikelementen der Anteile, denen entsprechende Aktoren zugeordnet sind, erreichen.

In einer konkreten Ausgestaltung der vorliegenden Erfindung kann vorgesehen sein, dass wenigstens eines des wenigstens einen Fahrerassistenzsystems ein Längsführungssystem und/oder ein Spurwechselassistenzsystem ist oder umfasst und die nicht umgelenkte Erfassungsrichtung des Umgebungssensors auf das Vorfeld des Kraftfahrzeugs gerichtet ist, wobei die Optikanordnung zur Umlenkung der Erfassungsrichtung auf den Rückraum des Kraftfahrzeugs ausgebildet ist. Bei einem solchen Fahrerassistenzsystem kann es sich insbesondere um einen Autobahnpiloten handeln. Jedoch auch bei Spurwechselassistenzsystemen, insbesondere auch Überholassistenzsystemen, alleine und/oder bei Längsführungssystemen, beispielsweise ACC-Systemen mit Sicherheitsfunktion, lässt sich die Erfindung zweckmäßig einsetzen, um bei hohen Geschwindigkeiten des Kraftfahrzeugs eine weite Erfassung sowohl für das Vorfeld des Kraftfahrzeugs als auch, falls die Situation es erfordert, für den Rückraum bereitzustellen. So kann beispielsweise vorgesehen sein, dass die Steuereinrichtung zur Ansteuerung der Umlenkanordnung zur Umlenkung der Erfassungsrichtung bei einer festgestellten Spurwechselabsicht ausgebildet ist. Beispielsweise bei Erkennen eines langsam fahrenden Verkehrsteilnehmers vor dem eigenen Kraftfahrzeug und der daraus entstehenden Absicht zum Spurwechsel auf einer mehrspurigen Schnellstraße, insbesondere einer Autobahn, kann es zweckmäßig sein, dann zu überprüfen, ob auf der benachbarten Fahrspur, die die Zielfahrspur ist, ein relevantes Kraftfahrzeug vorliegt.

In einer anderen Ausgestaltung der vorliegenden Erfindung kann auch vorgesehen sein, dass wenigstens eines des wenigstens einen Fahrerassistenzsystems ein Kreuzungsassistenzsystem ist oder umfasst und die nicht umgelenkte Erfassungsrichtung des Umgebungssensors auf das Vorfeld des Kraftfahrzeugs gerichtet ist, wobei die Optikanordnung zur Umlenkung der Erfassungsrichtung in wenigstens eine seitliche Richtung ausgebildet ist. Auf diese Weise kann von links und/oder rechts herannahender Verkehr an einer Kreuzung, insbesondere auch einer urbanen Kreuzung, rechtzeitig detektiert werden. Selbstverständlich lassen sich auch beide Ausgestaltungen, also Umlenkung in eine seitliche Richtung und in den Rückraum, beispielsweise über die beschriebenen Aktoren der Optikanordnung und/oder die Teileinrichtungen der Verstelleinrichtung, realisieren.

In konkreter Ausgestaltung der Verstelleinrichtung ist vorgesehen dass diese zum Ausfahren und/oder Ausklappen der Optikanordnung aus einer in der Karosserie versenkten Grundposition in eine Umlenkposition ausgebildet ist. Auf diese Weise kann die nur situativ, insbesondere also nicht besonders häufig, benötigte Optikanordnung in der Karosserie versenkt zum einen geschützt positioniert werden, zum anderen jedoch auch so, dass der optische Eindruck des Kraftfahrzeugs möglichst wenig beeinträchtigt wird und/oder die Windschnittigkeit der Karosserie im Normalzustand aufrechterhalten wird. Die Optikanordnung ist in der Grundposition hinter einer durch die Verstelleinrichtung und/oder eine Bewegung der Optikanordnung öffenbaren Klappe (21) angeordnet.

Eine derartige Klappe kann beispielsweise die Farbe der umgebenden Karosserie aufweisen und erlaubt mithin eine versteckte und besonders geschützte Unterbringung der Optikanordnung in der Grundposition. Dabei ist es allgemein im Rahmen der vorliegenden Erfindung besonders bevorzugt, wenn die Optikanordnung mechanisch aus- und eingeklappt wird, da auf diese Art eine recht schnelle Bereitstellung und Entfernung der Optikanordnung ermöglicht wird. Möglich ist es jedoch auch, beispielsweise autorisiert, die Optikanordnung auszufahren, wobei für beide Ausgestaltungen dies selbstverständlich auch für Teileinrichtungen, wie oben beschrieben, gilt. Konkret kann die Umlenkanordnung beispielsweise als eine Art mechanischer, zusätzlicher, ausfahrbarer Seitenspiegel für den Umgebungssensor verstanden werden. Neben dem Kraftfahrzeug betrifft die vorliegende Erfindung auch ein Verfahren zum Betrieb eines erfindungsgemäßen Kraftfahrzeugs, welches sich dadurch auszeichnet, dass bei Erfüllung wenigstens einer eine aktuelle Fahrsituation des Kraftfahrzeugs und/oder eine aktuelle Betriebssituation eines Fahrerassistenzsystems auswertenden Umlenkbedingung die Verstelleinrichtung zur Umlenkung der Erfassungsrichtung durch Verbringen der Optikanordnung in den Erfassungsbereich des Umgebungssensors angesteuert wird. Sämtliche Ausführungen bezüglich des erfindungsgemäßen Kraftfahrzeugs lassen sich auch auf das erfindungsgemäße Verfahren übertragen, so dass auch mit diesen die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: Erfassungsbereiche eines Lidarsensors des Kraftfahrzeugs gemäß Fig. 1,
- Fig. 3: eine Detailansicht der Karosserie im Bereich des Lidarsensors in einem ersten Betriebszustand,
- Fig. 4: die Detailansicht der Fig. 3 in einem zweiten Betriebszustand,
- Fig. 5: eine erste Möglichkeit zur Umlenkung eines Erfassungsbereichs, und
- Fig. 6: eine zweite Möglichkeit zur Umlenkung eines Erfassungsbereichs.

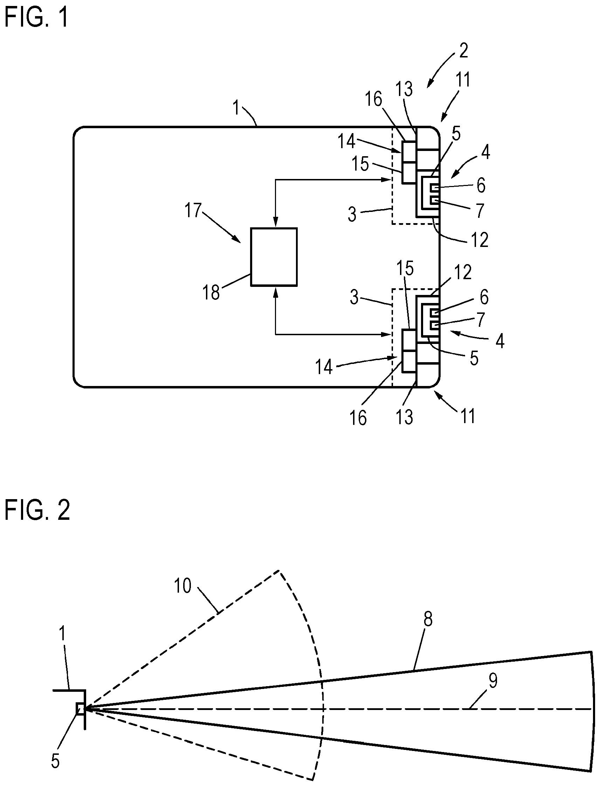

Fig. 1 zeigt eine Prinzipskizze eines erfindungsgemäßen Kraftfahrzeugs 1. Das Kraftfahrzeug 1 weist in seinem Frontbereich 2 auf der linken und der rechten Seite der Front jeweils ein Lidar-System 3 auf, welche jeweils als Umgebungssensor 4 einen Lidarsensor 5 aufweisen. Jeder der Lidarsensoren 5 weist vorliegend zwei Sensorköpfe, nämlich einen Nahbereichs-Sensorkopf 6 und einen Fernbereichs-Sensorkopf 7 auf. Obwohl in der schematischen Darstellung in der Fig. 1 die Sensorköpfe 6, 7 nebeneinander gezeigt sind, sind sie in der Praxis übereinander angeordnet, wie noch genauer erläutert werden wird.

Die sich für die Sensorköpfe 6, 7 ergebenden Erfassungsbereiche sind in Fig. 2 schematisch dargestellt. Für den Fernbereichs-Sensorkopf 7 ergibt sich der schmale, jedoch eine Erfassungsreichweite von über 100 m aufweisende Erfassungsbereich 8 in der Erfassungsrichtung 9, die vorliegend parallel zur Fahrzeuglängsachse verläuft.

Der Erfassungsbereich 10 des Nahbereichs-Sensorkopfes 6 weist ersichtlich eine deutlich geringere Erfassungsreichweite, aber einen größeren Öffnungskegel auf. Zudem ist die Erfassungsrichtung leicht quer gestellt.

Wie in Fig. 1 ferner schematisch dargestellt ist, umfassen die Lidar-Systeme 3 ferner auch eine Optikanordnung 11, die vorliegend einen ersten Anteil 12 im Bereich des jeweiligen Lidar-Sensors 5 und einen zweiten Anteil 13 in den jeweiligen Ecken des Kraftfahrzeugs umfasst. Der Optikanordnung 11 ist eine Verstelleinrichtung 14 zugeordnet, die vorliegend ebenso eine erste Teileinrichtung 15 für den ersten Anteil 12 und eine zweite Teileinrichtung 16 für den zweiten Anteil 13 aufweist. Beide Teileinrichtungen 15, 16 sind unabhängig ansteuerbar. Die Verstelleinrichtung 14 bringt durch die jeweiligen Teileinrichtungen 15, 16 die respektiven Anteile 12, 13 der Optikanordnung 11 in den Erfassungsbereich 8, der dem Fernbereichs-Sensorkopf 7 zugeordnet ist, ein. Das bedeutet, der erste Anteil 12, der grundsätzlich in der Karosserie des Kraftfahrzeugs 1 versenkt ist, kann ausgefahren und/oder ausgeklappt werden, so dass wenigstens ein Optikelement des ersten Anteils 12, hier ein Spiegel, im erfassungsrelevanten Strahlengang für die Sende- und der Empfangssignale des Fernbereichs-Sensorkopfes 7 positioniert werden. Das wenigstens eine Optikelement des ersten Anteils 12 ändert dann die Erfassungsrichtung 9 von der in Fig. 2 dargestellten Basis-Erfassungsrichtung 9 und lenkt den gesamten Erfassungsbereich 8 vom in Fig. 2 dargestellten Basis-Erfassungsbereich ab, und zwar derart, dass er die Position des entsprechend ausgefahrenen zweiten Anteils 13, ebenfalls umfassend wenigstens ein Optikelement, hier wiederum einrn Spiegel, trifft. Dieses weitere Optikelement lenkt die Erfassungsrichtung 9 und somit den Erfassungsbereich 8 komplett um, vorliegend in Richtung des Rückraums des Kraftfahrzeugs 1, wie noch genauer erläutert werden wird.

Das Kraftfahrzeug 1 weist ferner wenigstens ein Fahrerassistenzsystem 17, hier beispielhaft einen Autobahnpiloten und/oder ein Kreuzungsassistenzsystem, auf, dessen Funktionen in einem Steuergerät 18 umgesetzt sind. Das Steuergerät 18 wertet Sensordaten der Lidarsensoren 5 aus und ist zudem ausgebildet, die Lidar-Systeme 3, konkret insbesondere die Verstelleinrichtungen 14, anzusteuern.

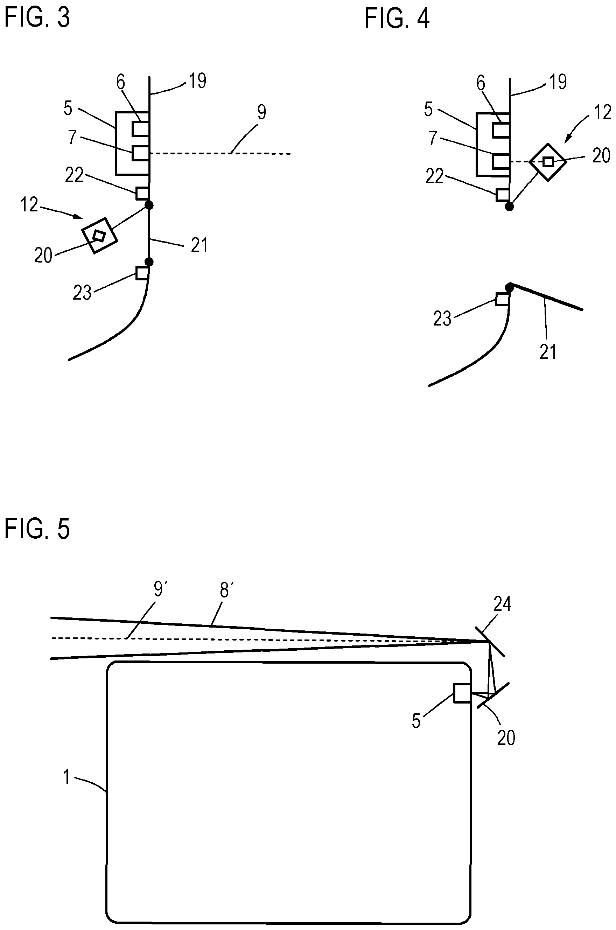

Fig. 3 zeigt eine Detailansicht der Karosserie 19 des Kraftfahrzeugs 1 im Bereich eines Lidar-Sensors 5 zur genaueren Erläuterung eines Ausführungsbeispiels der Verstelleinrichtung. Der erste Anteil 12 der Optikanordnung 11 ist vorliegend schwenkbar an der Karosserie 19 angelagert und weist als Optikelement einen Spiegel 20 auf. Fig. 3 zeigt dabei einen Grundzustand, in dem der erste Anteil 12 versenkt in der Karosserie 19 hinter einer Klappe 21 angeordnet ist, welche ebenso schwenkbar an der Karosserie 19 angelagert ist. Sowohl dem ersten Anteil 12 als auch der Klappe 21 sind dabei Aktoren 22, 23 der Teileinrichtung 15 der Verstelleinrichtung 14 zugeordnet. Werden die Aktoren 22, 23 entsprechend zum Verschwenken des ersten Anteils 12 und der Klappe 21 angesteuert, wird der erste Anteil 12 und somit der Spiegel 20 in den erfassungsrelevanten Strahlengang des Weitbereichs-Sensorkopfes 7 eingebracht, so dass die Erfassungsrichtung 9 entsprechend umgelenkt wird, hier in die Zeichenebene hinein oder aus der Zeichenebene hinaus. Ersichtlich ist der erfassungsrelevante Strahlengang des Nahbereichs-Sensorkopfes 6 jedoch nicht beeinträchtigt, so dass der Erfassungsbereich 10 unverändert verbleibt. Jedoch sind auch Ausführungsbeispiele denkbar, in denen auch der Erfassungsbereich 10 um lenkbar ist.

Die zweiten Anteile 13 sowie die zweiten Teileinrichtungen 16 können eine entsprechende Ausgestaltung bezüglich der Karosserie 19 aufweisen. Auch hier sind allgemein selbstverständlich andere Ausgestaltungen denkbar, beispielsweise eine mechanisch getriebene Verstellung entsprechend eines vorgegebenen Führungsweges (Linearverstellung) und dergleichen. Ferner ist es auch denkbar, dass die Klappe 21 ohne Aktor 23 durch den entsprechenden Anteil 12, 13 selbst betätigt wird.

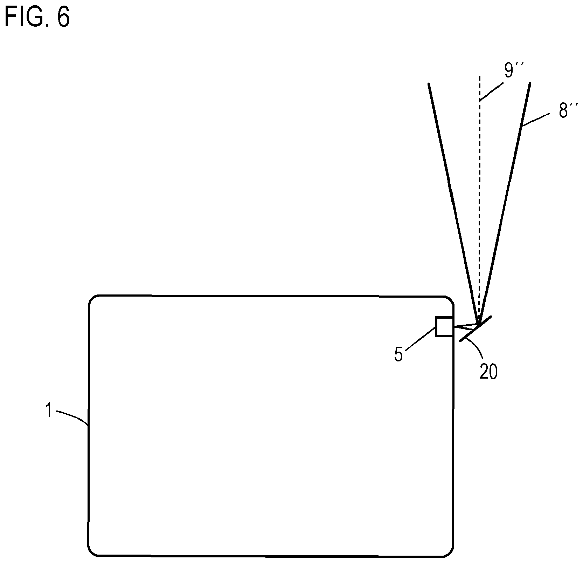

Die Figuren 5 und 6 zeigen Möglichkeiten zur Umlenkung des Erfassungsbereichs 8 in diesem Ausführungsbeispiel. Stellt die Steuereinrichtung 18 beispielsweise fest, dass eine Spurwechselabsicht auf eine links benachbarte Fahrspur besteht, steuert es die Verstelleinrichtung 14 derart an, dass beide Anteile 12, 13 der Optikanordnung 11 in die Umlenkposition ausgeklappt werden. Dies bedeutet, vgl. Fig. 5, dass sich der Spiegel 20 und auch der Spiegel 24 des zweiten Anteils 13 im erfassungsrelevanten Strahlengang des Fernbereichs-Sensorkopfes 7 des Lidarsensors 5 befinden, so dass sich die umgelenkte Erfassungsrichtung 9' und der umgelenkte Erfassungsbereich 8' gemäß Fig. 5 ergeben. In diesem Fall wird also an dem Kraftfahrzeug 1 vorbei im Rückraum des Kraftfahrzeugs 1, insbesondere auch auf der links benachbarten Zielfahrspur, detektiert und es kann festgestellt werden, ob dort ein relevanter Verkehrsteilnehmer befindlich ist.

Fig. 6 zeigt eine Ausgestaltung, in der das Kraftfahrzeug 1 an einer urbanen Kreuzung befindlich ist. In diesem Fall steuert die Steuereinrichtung 18 gezielt nur die Teileinrichtung 15 der Verstelleinrichtung 14 zum Verbringen des ersten Anteils 12 in die Umlenkposition an, so dass eine Umlenkung zur Seite, nämlich parallel zur Fahrzeugquerachse, erfolgt und sich der umgelenkte Erfassungsbereich 8" mit der umgelenkten Erfassungsrichtung 9" ergibt, so dass sich von links der Kreuzung nähernde Kraftfahrzeuge und sonstige Verkehrsteilnehmer detektiert werden können.

In einer alternativen Ausgestaltung ist dann, wenn die Optikanordnung 11 nur aus einem Anteil besteht, mithin alle Optikelemente der Optikanordnung 11 durch die Verstelleinrichtung 14 gleichzeitig aus der Grundposition in die Umlenkposition verbracht werden, auch eine Ausgestaltung denkbar, in der zumindest einem Teil der Optikelemente, im Beispiel dem Spiegel 24, ein Aktor zugeordnet ist, über den der Spiegel 24 in eine außerhalb des erfassungsrelevanten Strahlengangs befindliche Passivposition verbracht werden kann. Ferner sind selbstverständlich auch Ausgestaltungen denkbar, in denen eine größere Vielzahl von umgelenkten Erfassungsbereichen und Erfassungsrichtungen aufgrund solcher Aktoren der Optikanordnung 11 möglich sind.

## Patentansprüche

1. Kraftfahrzeug (1), aufweisend wenigstens einen optischen Umgebungssensor (4), der einen Erfassungsbereich (8) in einer Erfassungsrichtung (9) aufweist,
**dadurch gekennzeichnet,**
**dass** das Kraftfahrzeug (1) ferner eine Umlenkanordnung für den Umgebungssensor (4) aufweist, welche umfasst:
- eine Optikanordnung (11) zur Umlenkung der Erfassungsrichtung (9) und des gesamten Erfassungsbereichs (8), und
- eine Verstelleinrichtung (14) zum wahlweisen Verbringen der Optikanordnung (11) in den und aus dem Erfassungsbereich (8) des Umgebungssensors (4),
wobei die Verstelleinrichtung (14) zum Ausfahren und/oder Ausklappen der Optikanordnung (11) aus einer in der Karosserie (19) des Kraftfahrzeugs (1) versenkten Grundposition in eine Umlenkposition ausgebildet ist, wobei die Optikanordnung (11) in der Grundposition hinter einer durch die Verstelleinrichtung (14) und/oder eine Bewegung der Optikanordnung (11) öffenbaren Klappe (21) angeordnet ist.

2. Kraftfahrzeug (1) nach Anspruch 1,
**dadurch gekennzeichnet,**
**dass** die Erfassungsrichtung (9) des Umgebungssensors (4) ohne die Nutzung der Optikanordnung (11) auf das Vorfeld des Kraftfahrzeugs (1), insbesondere zumindest im Wesentlichen parallel zu oder entlang der Fahrzeuglängsachse, ausgerichtet ist, wobei die wenigstens eine umgelenkte Erfassungsrichtung (9', 9") auf den Rückraum des Kraftfahrzeugs (1), insbesondere zumindest im Wesentlichen parallel zu oder entlang der Fahrzeuglängsachse, und/oder auf einen Seitenbereich des Kraftfahrzeugs (1), insbesondere zumindest im Wesentlichen parallel zu oder entlang der Fahrzeugquerachse, ausgerichtet ist.

3. Kraftfahrzeug (1) nach Anspruch 1 oder 2,
**dadurch gekennzeichnet,**
**dass** der Umgebungssensor (4) ein Lidarsensor (5) oder eine Kamera ist.

4. Kraftfahrzeug (1) nach Anspruch 3,
**dadurch gekennzeichnet,**
**dass** der Lidarsensor (5) einen Nahbereichs-Sensorkopf (6) und einen Fernbereichs-Sensorkopf (7) aufweist, wobei die Optikanordnung (11) lediglich zur Umlenkung des Erfassungsbereichs (8) des Fernbereichs-Sensorkopfes (7) eingerichtet ist.

5. Kraftfahrzeug (1) nach einem der vorangehenden Ansprüche,
**dadurch gekennzeichnet,**
**dass** die Optikanordnung (11) wenigstens einen Spiegel (20, 24) umfasst.

6. Kraftfahrzeug (1) nach einem der vorangehenden Ansprüche,
**dadurch gekennzeichnet,**
**dass** das Kraftfahrzeug (1) wenigstens ein die Sensordaten des Umgebungssensors (4) auswertendes Fahrerassistenzsystem (17) mit einer Steuereinrichtung (18) aufweist, wobei die Steuereinrichtung (18) zur situationsabhängigen Nutzung der Umlenkanordnung durch Ansteuerung wenigstens der Verstelleinrichtung (14) ausgebildet ist.

7. Kraftfahrzeug (1) nach Anspruch 6,
**dadurch gekennzeichnet,**
**dass** die Optikanordnung (11) wenigstens einen durch die Steuereinrichtung (18) situationsabhängig ansteuerbaren Aktor und/oder die Verstelleinrichtung (14) unabhängig durch die Steuereinrichtung (18) situationsabhängig ansteuerbare Teileinrichtungen (15, 16) zur Einstellung unterschiedlicher umgelenkter Erfassungsrichtungen (9', 9") aufweist.

8. Kraftfahrzeug (1) nach Anspruch 6 oder 7,
**dadurch gekennzeichnet,**
**dass** wenigstens eines des wenigstens einen Fahrerassistenzsystems (17) ein Längsführungssystem und/oder ein Spurwechselassistenzsystem ist oder umfasst und die nicht umgelenkte Erfassungsrichtung (9) des Umgebungssensors (4) auf das Vorfeld des Kraftfahrzeugs (1) gerichtet ist, wobei die Optikanordnung (11) zur Umlenkung der Erfassungsrichtung (9) auf den Rückraum des Kraftfahrzeugs (1) ausgebildet ist.

9. Kraftfahrzeug (1) nach Anspruch 8,
**dadurch gekennzeichnet,**
**dass** die Steuereinrichtung (18) zur Ansteuerung der Umlenkanordnung zur Umlenkung der Erfassungsrichtung (9) bei einer festgestellten Spurwechselabsicht ausgebildet ist.

10. Kraftfahrzeug (1) nach einem der Ansprüche 6 bis 9,
**dadurch gekennzeichnet,**
**dass** wenigstens eines des wenigstens einen Fahrerassistenzsystems (17) ein Kreuzungsassistenzsystem ist oder umfasst und die nicht umgelenkte Erfassungsrichtung (9) des Umgebungssensors (4) auf das Vorfeld des Kraftfahrzeugs (1) gerichtet ist, wobei die Optikanordnung (11) zur Umlenkung der Erfassungsrichtung (9) in wenigstens eine seitliche Richtung ausgebildet ist.

11. Kraftfahrzeug (1) nach einem der vorangehenden Ansprüche,
**dadurch gekennzeichnet,**
**dass** die Optikanordnung (11) zur den Erfassungsbereich (8) geometrisch unverändert belassenden Umlenkung der Erfassungsrichtung (9) ausgebildet ist.

12. Verfahren zum Betrieb eines Kraftfahrzeugs (1) nach einem der vorangehenden Ansprüche,
**dadurch gekennzeichnet,**
**dass** bei Erfüllung wenigstens einer eine aktuelle Fahrsituation des Kraftfahrzeugs (1) und/oder eine aktuelle Betriebssituation eines Fahrerassistenzsystems (17) auswertenden Umlenkbedingung die Verstelleinrichtung (14) zur Umlenkung der Erfassungsrichtung (9) durch Verbringen der Optikanordnung (11) in den Erfassungsbereich (8) des Umgebungssensors (4) angesteuert wird.

## Claims

1. Motor vehicle (1) having at least one optical environment sensor (4) which has a detection zone (8) in a detection direction (9),
**characterised in**
the motor vehicle (1) further has a deflection arrangement for the environment sensor (4), said deflection arrangement comprising:
- an optical arrangement (11) for deflecting the detection direction (9) and the entire detection zone (8), and
- an adjustment apparatus (14) for optionally moving the optical arrangement (11) into and out of the detection zone (8) of the environment sensor (4), wherein the adjustment apparatus (14) is designed to extend and/or pivot out the optical arrangement (11) from a basic position recessed in the bodywork (19) of the motor vehicle (1) into a deflection position, wherein the optical arrangement (11) is arranged in the basic position behind a flap (21) which can be opened by the adjustment apparatus (14) and/or by a movement of the optical arrangement (11).

2. Motor vehicle (1) according to claim 1,
**characterised in**
**that** the detection direction (9) of the environment sensor (4), without the use of the optical arrangement (11), is oriented towards the front of the motor vehicle (1), in particular at least substantially parallel to or along the longitudinal axis of the vehicle, wherein the at least one deflected detection direction (9', 9") is oriented towards the rear of the motor vehicle (1), in particular at least substantially parallel to or along the longitudinal axis of the vehicle, and/or towards a side region of the motor vehicle (1), in particular at least substantially parallel to or along the transverse axis of the vehicle.

3. Motor vehicle (1) according to claim 1 or 2,
**characterised in**
**that** the environment sensor (4) is a lidar sensor (5) or a camera.

4. Motor vehicle (1) according to claim 3,
**characterised in**
**that** the lidar sensor (5) has a near-range sensor head (6) and a far-range sensor head (7), wherein the optical arrangement (11) is only configured to deflect the detection zone (8) of the far-range sensor head (7).

5. Motor vehicle (1) according to any of the preceding claims,
**characterised in**
**that** the optical arrangement (11) comprises at least one mirror (20, 24).

6. Motor vehicle (1) according to any of the preceding claims,
**characterised in**
**that** the motor vehicle (1) has at least one driver assistance system (17) which evaluates the sensor data of the environment sensor (4) and which has a control apparatus (18), wherein the control apparatus (18) is designed to use the deflection arrangement in a situation-dependent manner by actuating at least the adjustment apparatus (14).

7. Motor vehicle (1) according to claim 6,
**characterised in**
**that** the optical arrangement (11) has at least one actuator which can be actuated by the control apparatus (18) depending on the situation and/or the adjustment apparatus (14) has sub-apparatuses (15, 16) which can be actuated independently by the control apparatus (18) depending on the situation in order to set different deflected detection directions (9', 9").

8. Motor vehicle (1) according to claim 6 or 7,
**characterised in**
**that** at least one of the at least one driver assistance system (17) is or comprises a longitudinal guidance system and/or a lane change assistance system, and the non-deflected detection direction (9) of the environment sensor (4) is directed towards the front of the motor vehicle (1), wherein the optical arrangement (11) is designed to deflect the detection direction (9) to the rear of the motor vehicle (1).

9. Motor vehicle (1) according to claim 8,
**characterised in**
**that** the control apparatus (18) is designed to actuate the deflection arrangement in order to deflect the detection direction (9) when an intention to change lanes is established.

10. Motor vehicle (1) according to any of claims 6 to 9,
**characterised in**
**that** at least one of the at least one driver assistance system (17) is or comprises an intersection assistance system and the non-deflected detection direction (9) of the environment sensor (4) is directed towards the front of the motor vehicle (1), wherein the optical arrangement (11) is designed to deflect the detection direction (9) in at least one lateral direction.

11. Motor vehicle (1) according to any of the preceding claims,
**characterised in**
**that** the optical arrangement (11) is designed to deflect the detection direction (9) while leaving the detection zone (8) geometrically unchanged.

12. Method for operating a motor vehicle (1) according to any of the preceding claims, **characterised in**
**that** when at least one deflection condition evaluating a current driving situation of the motor vehicle (1) and/or a current operating situation of a driver assistance system (17) is fulfilled, the adjustment apparatus (14) is actuated to deflect the detection direction (9) by moving the optical arrangement (11) into the detection zone (8) of the environment sensor (4).

## Revendications

1. Véhicule automobile (1), présentant au moins un capteur d'environnement (4) optique, qui présente une zone de détection (8) dans une direction de détection (9),
**caractérisé en ce**
**que** le véhicule automobile (1) présente en outre un agencement de déviation pour le capteur d'environnement (4), lequel comprend :
- un agencement optique (11) pour dévier la direction de détection (9) et l'ensemble de la zone de détection (8), et
- un appareil de réglage (14) pour amener sélectivement l'agencement optique (11) dans et hors de la zone de détection (8) du capteur d'environnement (4), dans lequel l'appareil de réglage (14) pour déployer et/ou déplier l'agencement optique (11) à partir d'une position de base encastrée dans la carrosserie (19) du véhicule automobile (1) est conçu dans une position de déviation, dans lequel l'agencement optique (11) est disposé dans la position de base située derrière un rabat (21) ouvrable par l'appareil de réglage (14) et/ou un mouvement de l'agencement optique (11).

2. Véhicule automobile (1) selon la revendication 1,
**caractérisé en ce**
**que** la direction de détection (9) du capteur d'environnement (4) est orientée sans l'utilisation de l'agencement optique (11) sur la partie avant du véhicule automobile (1), en particulier au moins sensiblement parallèlement à ou le long de l'axe longitudinal du véhicule, dans lequel l'au moins une direction de détection (9', 9") déviée est orientée vers l'espace arrière du véhicule automobile (1), en particulier au moins sensiblement parallèlement à ou le long de l'axe longitudinal du véhicule, et/ou vers une zone latérale du véhicule automobile (1), en particulier au moins sensiblement parallèlement à ou le long de l'axe transversal du véhicule.

3. Véhicule automobile (1) selon la revendication 1 ou 2,
**caractérisé en ce**
**que** le capteur d'environnement (4) est un capteur Lidar (5) ou une caméra.

4. Véhicule automobile (1) selon la revendication 3,
**caractérisé en ce**
**que** le capteur de Lidar (5) présente une tête de capteur à courte portée (6) et une tête de capteur à longue portée (7), dans lequel l'agencement optique (11) est agencé uniquement pour dévier la zone de détection (8) de la tête de capteur à longue portée (7).

5. Véhicule automobile (1) selon l'une quelconque des revendications précédentes, **caractérisé en ce**
**que** l'agencement optique (11) comprend au moins un miroir (20, 24).

6. Véhicule automobile (1) selon l'une quelconque des revendications précédentes, **caractérisé en ce**
**que** le véhicule automobile (1) présente au moins un système d'assistance au conducteur (17) évaluant les données de capteur du capteur d'environnement (4) avec un appareil de commande (18), dans lequel l'appareil de commande (18) est conçu pour une utilisation en fonction de la situation de l'agencement de déviation en commandant au moins l'appareil de réglage (14).

7. Véhicule automobile (1) selon la revendication 6,
**caractérisé en ce**
**que** l'agencement optique (11) présente au moins un actionneur pouvant être commandé en fonction de la situation par l'appareil de commande (18) et/ou l'appareil de réglage (14) présente des sous-appareils (15, 16) pouvant être commandés indépendamment par l'appareil de commande (18) en fonction de la situation pour le réglage de différentes directions de détection déviées (9', 9").

8. Véhicule automobile (1) selon la revendication 6 ou 7,
**caractérisé en ce**
**qu'**au moins l'un de l'au moins un système d'assistance au conducteur (17) est ou comprend un système de guidage longitudinal et/ou un système d'assistance au changement de voie et la direction de détection (9) non déviée du capteur d'environnement (4) est orientée vers la partie avant du véhicule automobile (1), dans lequel l'agencement optique (11) est conçu pour dévier la direction de détection (9) vers l'espace arrière du véhicule automobile (1).

9. Véhicule automobile (1) selon la revendication 8,
**caractérisé en ce**
**que** l'appareil de commande (18) est conçu pour commander l'agencement de déviation pour dévier la direction de détection (9) lors de la détermination d'une intention de changement de voie.

10. Véhicule automobile (1) selon l'une quelconque des revendications 6 à 9, **caractérisé en ce**
**qu'**au moins un de l'au moins un système d'assistance au conducteur (17) est ou comprend un système d'assistance au franchissement d'un carrefour et la direction de détection (9) non déviée du capteur d'environnement (4) est orientée vers la partie avant du véhicule automobile (1), dans lequel l'agencement optique (11) est conçu pour dévier la direction de détection (9) dans au moins une direction latérale.

11. Véhicule automobile (1) selon l'une quelconque des revendications précédentes, **caractérisé en ce**
**que** l'agencement optique (11) est conçu pour dévier la direction de détection (9) en laissant la zone de détection (8) géométriquement inchangée.

12. Procédé de fonctionnement d'un véhicule automobile (1) selon l'une quelconque des revendications précédentes,
**caractérisé en ce**
**que** lors de la réalisation d'au moins une condition de déviation évaluant une situation de conduite actuelle du véhicule automobile (1) et/ou une situation de fonctionnement actuelle d'un système d'assistance au conducteur (17), l'appareil de réglage (14) est commandé pour dévier la direction de détection (9) en amenant l'agencement optique (11) dans la zone de détection (8) du capteur d'environnement (4).
